# EUROPÄISCHE PATENTSCHRIFT

(11) **EP 2 746 569 B1**
(45) Veröffentlichungstag und Bekanntmachung des Hinweises auf die Patenterteilung: **15.08.2018**
(21) Anmeldenummer: 13005770.6
(22) Anmeldetag: 11.12.2013
(51) Int. Cl.: F02P 5/15, F02P 15/00

(54) **Verfahren zum Betrieb eines Verbrennungsmotors in einem handgeführten Arbeitsgerät**
Method for operation of a combustion engine in a hand-held work device
Procédé de fonctionnement d'un moteur à combustion interne d'un outillage portatif

(30) Priorität: 19.12.2012 DE 102012024840
(43) Veröffentlichungstag der Anmeldung: 25.06.2014
(73) Patentinhaber: Andreas Stihl AG & Co. KG, 71336 Waiblingen (DE)
(72) Erfinder: Leufen, Heinrich, D-71409 Schwaikheim (DE); Maier, Georg, D-71394 Kernen (DE); Redecker, Jürgen, D-71394 Kernen (DE); Klein, Alexander, D-71332 Waiblingen (DE); Andresen, Erik, D-71336 Waiblingen (DE)
(74) Vertreter: Reinhardt, Annette

(56) Entgegenhaltungen:
- DE-A1-102006 056 924
- DE-A1-102011 103 125
- DE-U1-202006 008 781
- US-B1- 6 223 723

## Beschreibung

Die Erfindung betrifft ein Verfahren zum Betrieb eines Verbrennungsmotors in einem handgeführten Arbeitsgerät wie beispielsweise einem Freischneider, einem Blasgerät, einer Motorsäge, einem Trennschleifer oder dgl..

Aus der DE 10 2006 056 924 A1 ist ein Verfahren zum Betrieb des Verbrennungsmotors in einem handgeführten Arbeitsgerät bekannt, bei dem der Zündzeitpunkt in Abhängigkeit der Drehzahl festgelegt wird. Im Leerlauf ist ein später Zündzeitpunkt vorgesehen. In einem an den Leerlaufbereich anschließenden Beschleunigungsbereich wird ein früher Zündzeitpunkt eingestellt, der mit zunehmender Drehzahl bis auf den der Volllast zugeordneten Zündzeitpunkt weiter nach "früh" verstellt wird.

Es hat sich gezeigt, dass bei einem so gesteuerten Verbrennungsmotor kein stabiler Betrieb in Teillast möglich ist. Die Drehzahl schwankt stark, so dass es für einen Bediener nicht möglich ist, eine konstante Drehzahl zu halten. Ein Teillastbetrieb mit gegenüber Volllast verringerter Drehzahl ist für spezielle Anwendungen eines handgeführten Arbeitsgeräts, beispielsweise das Schneiden von Gras oder Reispflanzen, wünschenswert. Durch die verringerte Drehzahl wird ein schonender Schnitt erreicht und Folgeschäden an den Pflanzen können verringert werden. Gleichzeitig werden aufgrund der geringeren Drehzahl die Schallemissionen verringert. Beim Arbeiten in Teillast sind die Kreiselkräfte, die aufgrund der rotierenden Massen entstehen, geringer als in Volllast, so dass sich in Teillast ein erhöhter Bedienkomfort ergibt. Zudem ist der Kraftstoffverbrauch geringer als in Volllast.

Die rotierenden Massen sind dabei insbesondere die rotierenden Massen des Motors und des Werkzeugs. Ein Verbrennungsmotor, der einen stabilen Betrieb in Teillast ermöglicht, ist deshalb wünschenswert.

Der Erfindung liegt die Aufgabe zugrunde, ein Verfahren zum Betrieb eines Verbrennungsmotors in einem handgeführten Arbeitsgerät zu schaffen, mit dem auch in Teillast ein stabiler Betrieb bei geringen Drehzahlschwankungen möglich ist.

Diese Aufgabe wird durch ein Verfahren zum Betrieb eines Verbrennungsmotors in einem handgeführten Arbeitsgerät mit den Merkmalen des Anspruchs 1 gelöst.

Es hat sich gezeigt, dass für einen stabilen Teillastbetrieb der Zündzeitpunkt in einem ersten Drehzahlbereich, der dem Teillastbereich entspricht, mindestens 5° Kurbelwellenwinkel später als der Zündzeitpunkt in einem zweiten Drehzahlbereich, der dem Volllastbetrieb entspricht, liegen sollte. Der erste Drehzahlbereich erstreckt sich mindestens von der Einkuppeldrehzahl bis zu einer Grenzdrehzahl von etwa 7.000 U/min. Ab der Einkuppeldrehzahl bis zu einer Drehzahl von etwa 7.000 U/min wird demnach ein vergleichsweise später Zündzeitpunkt gewählt. Insbesondere bei warmem Verbrennungsmotor wird durch den späten Zündzeitpunkt die Leistung des Verbrennungsmotors im Teillastbereich künstlich verschlechtert. Aufgrund des späteren Zündzeitpunkts im ersten Drehzahlbereich wird weniger Energie bei jeder Verbrennung erzeugt. Um die Drehzahl konstant zu halten, ist es bekannt, die Zündung in einzelnen Motorzyklen auszusetzen. Wird im ersten Drehzahlbereich zu einem vergleichsweise frühen Zündzeitpunkt gezündet, so wird die Kurbelwelle sehr stark beschleunigt und die Zündung muss über mehrere Motorzyklen ausgesetzt werden, bis die Drehzahl wieder auf den gewünschten Wert abgefallen ist. Durch die starke Beschleunigung der Kurbelwelle nach einer Zündung und die darauffolgenden mehreren Motorzyklen ohne Verbrennung ergeben sich starke Schwankungen der Drehzahl. Wird im ersten Drehzahlbereich zu einem späteren Zeitpunkt gezündet, so ist die Beschleunigung der Kurbelwelle geringer und es muss nur für wenige, insbesondere für keinen Motorzyklus die Zündung ausgesetzt werden. Dadurch kann die Drehzahl im Teillastbereich näherungsweise konstant gehalten werden. Es wird ein dauerhafter Betrieb in einem weiten Teillastbereich ermöglicht. Der Bediener kann die Drehzahl stabil halten und das Arbeitsgerät dauerhaft in Teillast betreiben, beispielsweise, wenn nur eine verringerte Leistung zum Antrieb des Werkzeugs benötigt wird.

Die Grenzdrehzahl entspricht vorteilhaft mindestens dem Doppelten der Einkuppeldrehzahl. Dadurch wird ein sehr breiter Teillastbereich, der sich über einen vergleichsweise großen Drehzahlbereich erstreckt, erreicht. Die Grenzdrehzahl beträgt vorteilhaft etwa 7.000 U/min bis etwa 9.000 U/min.

Vorteilhaft unterscheiden sich der erste Zündzeitpunkt und der zweite Zündzeitpunkt um mindestens 10° Kurbelwellenwinkel. Der erste Zündzeitpunkt liegt dabei um mindestens 10° Kurbelwellenwinkel später als der zweite Zündzeitpunkt. Zwischen dem ersten Drehzahlbereich und dem zweiten Drehzahlbereich ist demnach ein deutlicher Zündzeitpunktsprung von mindestens 10° Kurbelwellenwinkel gebildet.

Vorteilhaft umfasst jeder Zündzeitpunktbereich höchstens 8° Kurbelwellenwinkel. Die Zündzeitpunktbereiche entsprechen demnach jeweils einem Zündzeitpunktband mit einer Breite von 8° Kurbelwellenwinkel. Die beiden Zündzeitpunktbänder besitzen einen Abstand von mindestens 5° Kurbelwellenwinkel zueinander. Vorteilhaft ist die Beziehung zwischen Zündzeitpunkt und Drehzahl in mindestens einem der Zündzeitpunktbereiche linear. Der Zündzeitpunkt kann sich dabei in Abhängigkeit der Drehzahl linear ändern oder konstant für den gesamten Drehzahlbereich sein. Insbesondere wird der Zündzeitpunkt bei steigender Drehzahl innerhalb des Zündzeitpunktbereichs nicht nach "früh" verstellt. Der Zündzeitpunkt kann dabei bei steigender Drehzahl konstant bleiben oder nach "spät" verstellt werden. Durch eine Spätverstellung des Zündzeitpunkts in mindestens einem Teilabschnitt des ersten Drehzahlbereichs wird eine Stabilisierung der Drehzahl erreicht, da die Verbrennung aufgrund der Verstellung des Zündzeitpunkts nach "spät" bei steigenden Drehzahlen weniger Energie freisetzt und dadurch einen Drehzahlabfall bewirkt. Die Kurve, die die Beziehung zwischen Zündzeitpunkt und Drehzahl angibt, ist vorteilhaft im ersten Drehzahlbereich stetig. Die Kurve, die die Beziehung zwischen Zündzeitpunkt und Drehzahl angibt, weist für den ersten Drehzahlbereich keinen Sprung auf. Die Kurve kann dabei in Teilabschnitten oder für den gesamten ersten Drehzahlbereich linear verlaufen. Vorteilhaft setzt sich die Kurve aus mehreren Geraden unterschiedlicher Steigung zusammen.

Der erste Zündzeitpunkt liegt vorteilhaft im Bereich von etwa 10° Kurbelwellenwinkel vor dem oberen Totpunkt des Kolbens bis etwa 40° Kurbelwellenwinkel vor dem oberen Totpunkt des Kolbens. Besonders vorteilhaft liegt der erste Zündzeitpunkt im Bereich von etwa 10° Kurbelwellenwinkel vor dem oberen Totpunkt des Kolbens bis etwa 35° Kurbelwellenwinkel vor dem oberen Totpunkt des Kolbens. Der zweite Zündzeitpunkt liegt vorteilhaft im Bereich von etwa 20° Kurbelwellenwinkel vor dem oberen Totpunkt des Kolbens bis etwa 45° Kurbelwellenwinkel vor dem oberen Totpunkt des Kolbens, insbesondere von etwa 30° Kurbelwellenwinkel vor dem oberen Totpunkt des Kolbens bis etwa 40° Kurbelwellenwinkel vor dem oberen Totpunkt des Kolbens. Dadurch wird eine hohe Leistung beim Betrieb des Verbrennungsmotors in dem zweiten Drehzahlbereich, der dem Volllastbereich entspricht, erreicht.

Jeder Drehzahl des ersten Drehzahlbereichs ist ein erster Zündzeitpunkt zugeordnet und jeder Drehzahl des zweiten Drehzahlbereichs ist ein zweiter Zündzeitpunkt zugeordnet. Vorteilhaft wird in mindestens einem Betriebszustand bei einer Drehzahländerung von einer Drehzahl außerhalb eines der Drehzahlbereiche zu einer Drehzahl dieses Drehzahlbereichs, also bei einer Drehzahländerung von einer Drehzahl außerhalb des ersten Drehzahlbereichs zu einer Drehzahl des ersten Drehzahlbereichs oder bei einer Drehzahländerung von einer Drehzahl außerhalb des zweiten Drehzahlbereichs zu einer Drehzahl des zweiten Drehzahlbereichs, der Zündzeitpunkt nicht sprunghaft auf den diesem Drehzahlbereich zugeordneten Zündzeitpunkt verstellt, sondern zeitabhängig gesteuert, bis der zugeordnete Zündzeitpunkt erreicht ist oder die Drehzahl diesen Drehzahlbereich wieder verlässt. Es hat sich gezeigt, dass bei einer Drehzahländerung zu einer Drehzahl eines der Drehzahlbereiche eine sprunghafte Verstellung des Zündzeitpunkts auf den diesem Drehzahlbereich zugeordneten Zündzeitpunkt nachteilig sein kann. Es ist deshalb vorgesehen, im ersten und im zweiten Drehzahlbereich dann, wenn die Drehzahl in diesen Drehzahlbereich eintritt, den Zündzeitpunkt zunächst nicht auf den nach der Zündsteuereinrichtung vorgesehenen, diesem Drehzahlbereich zugeordneten Zündzeitpunkt zu verstellen, sondern die Verstellung auf den dem Drehzahlbereich zugeordneten Zündzeitpunkt zeitabhängig zu steuern. Die zeitabhängige Steuerung kann dabei eine schrittweise, lineare Steuerung oder eine beliebige kurvenförmige Steuerung sein.

Durch die sprunghafte Verstellung des Zündzeitpunkts können sich insbesondere bei einer Verstellung des Zündzeitpunkts von einem ersten auf einen zweiten Zündzeitpunkt, also bei einer deutlichen, sprunghaften Verstellung des Zündzeitpunkts nach "früh" Vibrationen des Arbeitsgeräts ergeben, die unerwünscht sind. Die sprunghafte Verstellung des Zündzeitpunkts nach "früh" bewirkt eine sprunghafte Leistungszunahme, die auf die Antriebswelle eines Werkzeugs des Arbeitsgeräts übertragen wird. Die Leistungszunahme bewirkt einen Ruck am Werkzeug, der dazu führt, dass die Drehzahl bei einem darauffolgenden Motorzyklus wieder unter die Grenzdrehzahl fällt, was einen späteren Zündzeitpunkt zur Folge hat. Eine darauffolgende Beschleunigung hat erneut ein Überschreiten der Grenzdrehzahl und eine sprunghafte Verstellung des Zündzeitpunkts nach "früh" zur Folge. Die Grenzdrehzahl wird so mehrmals kurz hintereinander Überschritten und Unterschritten, was zu Vibrationen des Arbeitsgeräts führt. Diese Vibrationen können durch die zeitabhängige Steuerung des Zündzeitpunkts beim Überschreiten der Grenzdrehzahl vermieden werden.

Insbesondere bei kaltem Verbrennungsmotor und beim Beschleunigen in den Teillastbereich wird bei einer Zündung zum ersten Zündzeitpunkt eine schlechte Beschleunigung erreicht, da der erste Zündzeitpunkt, der dem Teillastbereich zugeordnet ist, bei kalter Maschine eine zu geringe Brenndauer und damit eine schlechte Kaltbeschleunigung bewirkt. Die Beschleunigung bei einer Änderung der Drehzahl zu einer Drehzahl des ersten Drehzahlbereichs kann dadurch, dass der Zündzeitpunkt zunächst auf den zweiten Zündzeitpunkt, also einen frühen Zündzeitpunkt verstellt wird und die Verstellung auf den ersten Zündzeitpunkt zeitabhängig gesteuert erfolgt, deutlich verbessert werden.

Eine einfache Ausbildung ergibt sich, wenn die zeitabhängige Steuerung des Zündzeitpunkts in Abhängigkeit einer Anzahl von Motorzyklen erfolgt. Vorteilhaft wird der Zündzeitpunkt nach Überschreiten der Grenzdrehzahl nach dem darauffolgenden Durchlaufen einer vorgegebenen Anzahl von Motorzyklen in diesem Drehzahlbereich schrittweise auf den diesem Drehzahlbereich zugeordneten Zündzeitpunkt verstellt. Die Verstellung des Zündzeitpunkts erfolgt demnach nicht unmittelbar nachdem die Drehzahl in diesen Drehzahlbereich verstellt wurde, sondern erst nach einer vorgegebenen Anzahl von Motorzyklen in diesem Drehzahlbereich. Dadurch wird bei Drehzahländerungen im Bereich der Grenzdrehzahl, also dann, wenn die Grenzdrehzahl mehrfach in kurz aufeinanderfolgenden Abständen über- oder unterschritten wird, ein stabiles Laufverhalten erreicht. Die Verstellung des Zündzeitpunkts auf den diesem Drehzahlbereich zugeordneten Zündzeitpunkt kann auch nach Ablauf einer vorgegebenen Zeit in diesem Drehzahlbereich oder nach Überschreiten einer Aktivierungsdrehzahl, die oberhalb der Grenzdrehzahl liegt, erfolgen. Auch eine Kombination dieser Kriterien für den Beginn der Verstellung des Zündzeitpunkts kann vorgesehen sein. Es kann auch vorgesehen sein, dass die Verstellung des Zündzeitpunkts unmittelbar nach dem Verstellen der Drehzahl in diesen Drehzahlbereich erfolgt.

Vorteilhaft wird der Zündzeitpunkt bei einer Drehzahländerung von einer Drehzahl des ersten Drehzahlbereichs zu einer Drehzahl des zweiten Drehzahlbereichs in mindestens einem Betriebszustand ausgehend vom ersten Zündzeitpunkt zeitabhängig nach "früh" verstellt, bis der zweite Zündzeitpunkt erreicht ist oder die Drehzahl den zweiten Drehzahlbereich verlässt. Die zeitabhängige Verstellung des Zündzeitpunkts bei einer Drehzahländerung von einer Drehzahl des ersten Drehzahlbereichs zu einer Drehzahl des zweiten Drehzahlbereichs erfolgt insbesondere in jedem Betriebszustand. Ein Betriebszustand kann dabei der Betrieb oberhalb oder unterhalb einer vorgegebenen Betriebstemperatur des Verbrennungsmotors, also ein Betrieb bei kaltem oder warmem Verbrennungsmotor, sein. Ein Betriebszustand kann auch abhängig vom Umgebungsdruck, von der Kraftstoffzusammensetzung oder dgl. herrschen. Auch eine Kombination dieser, weiterer oder anderer Parameter kann einen Betriebszustand definieren. Ein Betriebszustand unterscheidet sich von einem anderen Betriebszustand dadurch, dass unterschiedliche Zündzeitpunkte für die gleiche Drehzahl zweckmäßig sind.

Bei einer Drehzahländerung von einer Drehzahl außerhalb des ersten Drehzahlbereichs zu einer Drehzahl des ersten Drehzahlbereichs ist vorteilhaft bei Erfüllen mindestens eines ersten vorgegebenen Kriteriums vorgesehen, dass der Zündzeitpunkt ausgehend vom zweiten Zündzeitpunkt zeitabhängig nach "spät" verstellt wird, bis der erste Zündzeitpunkt erreicht ist oder die Drehzahl den ersten Drehzahlbereich verlässt. Die Verstellung des Zündzeitpunkts vom zweiten auf den ersten Zündzeitpunkt ist insbesondere dann vorgesehen, wenn die Drehzahl sich von einer Drehzahl des zweiten Drehzahlbereichs zu einer Drehzahl des ersten Drehzahlbereichs ändert. Die zeitabhängige Verstellung des Zündzeitpunkts vom zweiten Zündzeitpunkt auf den ersten Zündzeitpunkt ist jedoch auch dann vorgesehen, wenn die Drehzahl beim Beschleunigen aus dem Leerlaufbereich in den ersten Drehzahlbereich eintritt. Auch wenn sich die Drehzahl vom Leerlaufbereich zum Teillastbereich ändert, ist vorgesehen, den Zündzeitpunkt zunächst auf den Zündzeitpunkt des zweiten Drehzahlbereichs zu verstellen. Dies ist üblicherweise eine sehr deutliche Verstellung des Zündzeitpunkts nach "früh". Dadurch wird eine gute Beschleunigung des Verbrennungsmotors ermöglicht.

Das erste Kriterium, nach dessen Erfüllen der Zündzeitpunkt ausgehend vom zweiten Zündzeitpunkt zeitabhängig nach "spät" verstellt wird, bis der erste Zündzeitpunkt erreicht ist oder die Drehzahl den ersten Drehzahlbereich verlässt, ist insbesondere das Erreichen einer Temperatur des Arbeitsgeräts, insbesondere einer gewünschten Betriebstemperatur. Insbesondere bei kaltem Verbrennungsmotor bewirkt der für den ersten Drehzahlbereich vorgesehene, vergleichsweise späte Zündzeitpunkt eine unzureichende Beschleunigung. Bei kalter Maschine, also wenn der Verbrennungsmotor unterhalb einer gewünschten Betriebstemperatur betrieben wird, ist deshalb vorgesehen, den Zündzeitpunkt im ersten Drehzahlbereich zunächst auf den zweiten Zündzeitpunkt einzustellen. Wird das vorgegebene erste Kriterium erfüllt, dann wird der Zündzeitpunkt ausgehend vom zweiten Zündzeitpunkt schrittweise auf den ersten Zündzeitpunkt nach "spät" verstellt, wenn sich die Drehzahl im ersten Drehzahlbereich befindet.

Das erste vorgegebene Kriterium ist vorteilhaft das Erreichen einer Temperatur des Arbeitsgeräts und/oder das Durchlaufen einer vorgegebenen Anzahl von Motorzyklen nach einem vorgegebenen Ereignis. Das vorgegebene Ereignis ist dabei insbesondere der Start des Verbrennungsmotors. Besonders vorteilhaft wird die Temperatur des Verbrennungsmotors oder eine Temperatur, die auf die Temperatur des Verbrennungsmotors Rückschlüsse zulässt, wie beispielsweise die Temperatur einer Zündsteuereinrichtung oder dgl., gemessen. Die Temperatur des Verbrennungsmotors wird insbesondere mit einem Temperatursensor am Zylinder oder am Kurbelgehäuse des Verbrennungsmotors gemessen. In Abhängigkeit der gemessenen Temperatur wird vorteilhaft festgelegt, wie viele Motorzyklen zu durchlaufen sind, bis davon auszugehen ist, dass das erste vorgegebene Kriterium erfüllt, insbesondere die gewünschte Betriebstemperatur erreicht ist. Nach Ablauf dieser Anzahl von Motorzyklen ist bei einer Drehzahländerung von einer Drehzahl außerhalb des ersten Drehzahlbereichs zu einer Drehzahl des ersten Drehzahlbereichs eine Verstellung des Zündzeitpunkts unmittelbar auf den ersten Zündzeitpunkt vorgesehen.

Es kann auch vorgesehen sein, dass zur Ermittlung, ob das vorgegebene erste Kriterium erfüllt ist, die Anzahl der durchlaufenden Motorzyklen nach Überschreiten einer vorgegebenen Drehzahl ermittelt wird. Auch die oberhalb der vorgegebenen Drehzahl zu durchlaufenden Motorzyklen können anhand einer Temperatur vor dem Starten des Verbrennungsmotors festgelegt werden. Es kann jedoch auch vorgesehen sein, dass das vorgegebene erste Kriterium nur anhand einer Temperatur des Arbeitsgeräts oder nur anhand der Anzahl der durchlaufenden Motorzyklen nach einem vorgegebenen Ereignis, beispielsweise dem Start des Verbrennungsmotors oder dem Überschreiten einer vorgegebenen Drehzahl, ermittelt wird. Die vorgegebene Drehzahl ist dabei insbesondere die Grenzdrehzahl. Durch Messung einer Temperatur des Verbrennungsmotors, insbesondere der Temperatur des Kurbelgehäuses oder des Zylinders, kann auch direkt gemessen werden, ob der Verbrennungsmotor die Betriebstemperatur erreicht hat.

Ein Ausführungsbeispiel der Erfindung wird im Folgenden anhand der Zeichnung erläutert. Es zeigen:
- Fig. 1: eine schematische Darstellung eines handgeführten Arbeitsgeräts,
- Fig. 2: eine schematische Schnittdarstellung des Arbeitsgeräts aus Fig. 1,
- Fig. 3: eine schematische Schnittdarstellung des Verbrennungsmotors des Arbeitsgeräts aus Fig. 1,
- Fig. 4 und 5: Darstellungen des Verlaufs des Zündzeitpunkts für den Verbrennungsmotor in Abhängigkeit der Drehzahl,
- Fig. 6: den Verlauf der Drehzahl und des Zündzeitpunkts über der Zeit,
- Fig. 7: eine Darstellung des Zündzeitpunkts über der Drehzahl.

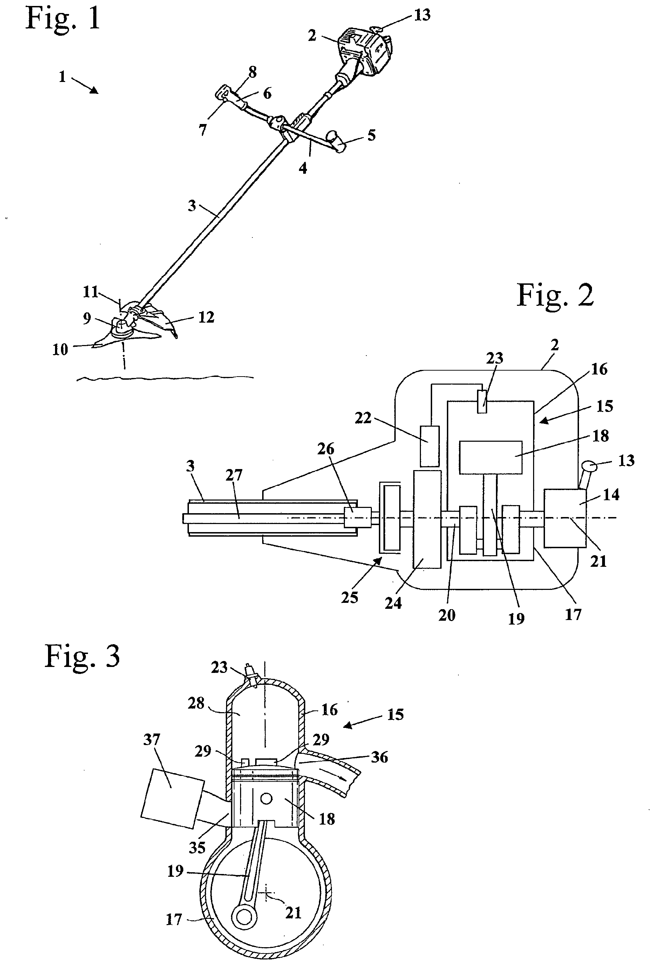

Fig. 1 zeigt als Ausführungsbeispiel für ein handgeführtes Arbeitsgerät 1 einen Freischneider. Das im Nachfolgenden beschriebene Verfahren zum Betrieb eines Verbrennungsmotors kann jedoch auch für den Verbrennungsmotor in einem anderen handgeführten Arbeitsgerät wie beispielsweise einem Blasgerät, einer Heckenschere, einer Motorsäge, einem Trennschleifer oder dgl. eingesetzt werden. Bei einem Blasgerät ist das den Arbeitsluftstrom fordernde Lüfterrad das Werkzeug. Das nachfolgend beschriebene Verfahren wird vorteilhaft bei dem Verbrennungsmotor in einem handgeführten Arbeitsgerät eingesetzt, der üblicherweise über längere Zeitspannen in Teillast betrieben wird. Dies ist insbesondere bei Freischneidern der Fall, die als Werkzeug ein metallisches Messer besitzen.

Das Arbeitsgerät 1 besitzt ein an einem Ende eines Führungsrohrs 3 angeordnetes Motorgehäuse 2, in dem ein in Fig. 2 gezeigter Verbrennungsmotor 15 angeordnet ist. Aus dem Motorgehäuse ragt ein Anwerfgriff 13, der zur Betätigung einer Starteinrichtung 14 für den Verbrennungsmotor 15 dient.

Wie Fig. 1 zeigt, ist an dem dem Motorgehäuse 2 abgewandten, dem Boden zugewandten Ende des Führungsrohrs 3 ein Getriebekopf 9 festgelegt, dessen nicht gezeigte Antriebswelle ein Messer 10 um eine Drehachse 11 rotierend antreibt. Benachbart zum Getriebekopf 9 ist am Führungsrohr 3 ein Schutz 12 fixiert. Wie Fig. 1 auch zeigt, ist am Führungsrohr 3 ein Griffrahmen 4 gehalten, an dem zwei Handgriffe 5 und 6 festgelegt sind. Der Handgriff 6 trägt einen Gashebel 7 zur Bedienung des Verbrennungsmotors 15 sowie eine Gashebelsperre 8.

Wie Fig. 2 zeigt, besitzt der Verbrennungsmotor 15 einen Zylinder 16, in dem ein Kolben 18 hin- und hergehend gelagert ist. Der Kolben 18 treibt über ein Pleuel 19 eine in einem Kurbelgehäuse 17 um eine Drehachse 21 drehbar gelagerte Kurbelwelle 20 an. Wie Fig. 3 zeigt, ist im Zylinder 16 ein vom Kolben 18 begrenzter Brennraum 28 ausgebildet. In den Brennraum 28 ragt eine Zündkerze 23. Wie Fig. 2 zeigt, ist die Zündkerze 23 von einer Zündsteuereinrichtung 22 gesteuert. Im Ausführungsbeispiel ist die Zündsteuereinrichtung 22 am Außenumfang eines Schwungrads 24 angeordnet. Das Schwundrad 24 trägt nicht gezeigte Magnete, die an der Zündsteuereinrichtung 22 die Zündspannung für die Zündkerze 23 erzeugen. Die Zündsteuereinrichtung 22 kann auch eine separate Steuereinrichtung sein. Das Schwungrad 24 ist drehfest mit der Kurbelwelle 20 verbunden. An der dem Schwungrad 24 abgewandten Seite ist eine Kupplung 25 angeordnet, die als Fliehkraftkupplung ausgebildet ist und die in eingekuppeltem Zustand die Kurbelwelle 20 mit einer Antriebswelle 27 verbindet. Die Antriebswelle 27 durchragt das Führungsrohr 3 und treibt das im Getriebekopf 9 angeordnete Getriebe an. Die Kupplungstrommel der Kupplung 25 ist im Ausführungsbeispiel über ein Koppelelement 26 mit der Antriebswelle 27 verbunden.

Wie Fig. 3 zeigt, ist der Verbrennungsmotor 15 als Zweitaktmotor ausgebildet. Der Verbrennungsmotor 15 ist ein Einzylindermotor. Der Verbrennungsmotor 15 besitzt einen vom Kolben 18 gesteuerten Einlass 35 ins Kurbelgehäuse 17. Über den Einlass 35 wird Kraftstoff/Luft-Gemisch ins Kurbelgehäuse 17 zugeführt. Das Kraftstoff/Luft-Gemisch wird in einem Vergaser 37 gebildet, in dem der angesaugten Verbrennungsluft Kraftstoff zugeführt wird. Es kann auch vorgesehen sein, den Kraftstoff über ein Kraftstoffventil im Vergaser 37, in den Ansaugkanal oder direkt ins Kurbelgehäuse 17 oder den Brennraum 28 zuzuführen. Das Kurbelgehäuse 17 ist über Überströmkanäle 29 im unteren Totpunkt des Kolbens 18 mit dem Brennraum 28 verbunden. Die Mündungsöffnung der Überströmkanäle 29 in den Brennraum 28 ist ebenfalls vom Kolben 18 gesteuert. Aus dem Brennraum 28 führt ein ebenfalls vom Kolben 18 gesteuerter Auslass 36. Im Betrieb wird beim Aufwärtshub des Kolbens 18 Kraftstoff/Luft-Gemisch über den Einlass 35 ins Kurbelgehäuse 17 angesaugt. Das Kraftstoff/Luft-Gemisch wird beim Abwärtshub des Kolbens 18 komprimiert und im Bereich des unteren Totpunkts des Kolbens 18 über die Überströmkanäle 29 in den Brennraum 28 gedrückt. Im Bereich des oberen Totpunkts des Kolbens 18 zündet die Zündkerze 23 das Kraftstoff/Luft-Gemisch im Brennraum 28. Die nachfolgende Verbrennung beschleunigt den Kolben 18 in Richtung auf seinen unteren Totpunkt. Sobald der Auslass 36 öffnet, strömen die Abgase aus dem Brennraum 28 aus, und frisches Kraftstoff/Luft-Gemisch für den nächsten Motorzyklus strömt über die Überströmkanäle 29 aus dem Kurbelgehäuse 17 nach.

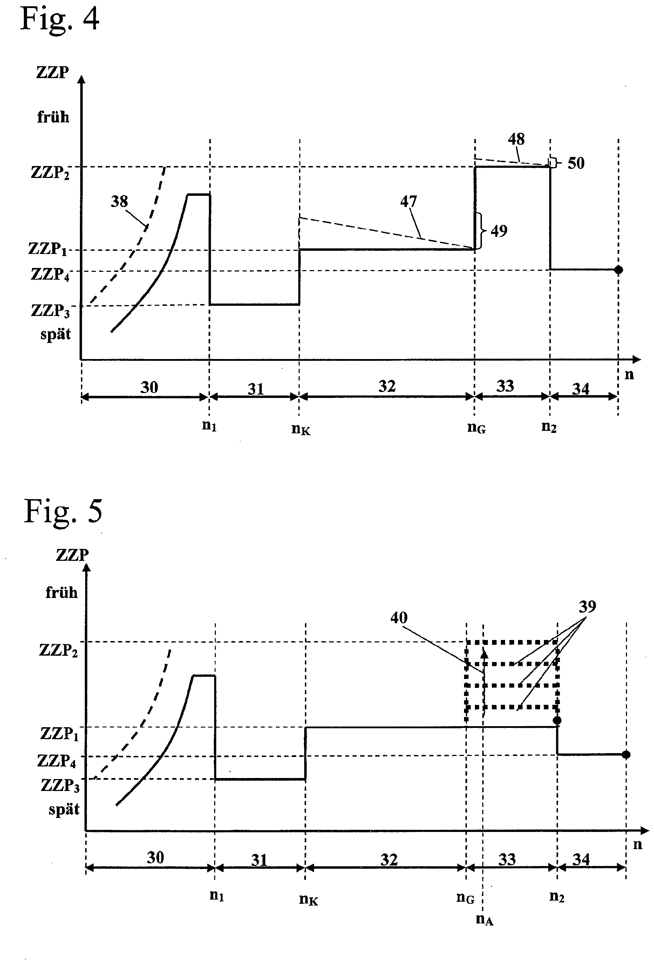

Um bei jeder Drehzahl ein günstiges Verhalten des Verbrennungsmotors 15 zu erreichen, wird der Zündzeitpunkt, also der Zeitpunkt, zu dem die Zündkerze 23 bezogen auf den oberen Totpunkt des Kolbens 18 zündet, in Abhängigkeit der Drehzahl des Verbrennungsmotors 15 festgelegt. Ein Diagramm, das den Zündzeitpunkt ZZP über der Drehzahl n angibt, ist in Fig. 4 gezeigt. In einem Drehzahlbereich 30, der sich von Stillstand bis zu einer Drehzahl n₁ erstreckt, wird der Zündzeitpunkt ZZP bei steigender Drehzahl n immer weiter nach "früh" verstellt. Der Drehzahlbereich 30 entspricht dem Startdrehzahlbereich des Verbrennungsmotors 15. Wie die gestrichelte Linie 38 in Fig. 4 andeutet, sind für den Drehzahlbereich 30 für den Start vorteilhaft mehrere Kennlinien hinterlegt, die den Zündzeitpunkt ZZP in Abhängigkeit der Drehzahl n angeben und die in Abhängigkeit eines oder mehrerer Betriebsparameter des Verbrennungsmotors 15 in bekannter Weise ausgewählt werden können.

An den Drehzahlbereich 30 schließt sich ein Drehzahlbereich 31 an, der dem Leerlaufbereich entspricht. Der Drehzahlbereich 31 erstreckt sich von der Drehzahl n₁ bis zu einer Einkuppeldrehzahl n_{K}. Die Einkuppeldrehzahl n_{K} liegt vorteilhaft in einem Drehzahlbereich von etwa 3.500 U/min bis etwa 5.000 U/min. Die Einkuppeldrehzahl n_{K} ist die Drehzahl n, bei der die Kupplung 25 einkuppelt. Kuppelt die Kupplung 25 in einem Drehzahlband ein, so ist die Einkuppeldrehzahl n_{K} die mittlere Drehzahl zwischen der Drehzahl n, bei der die Kupplung 25 einzukuppeln beginnt, und der Drehzahl n, bei der die Kupplung 25 vollständig eingekuppelt hat. Die Drehzahl n₁ liegt vorteilhaft in einem Bereich von etwa 1.000 U/min bis etwa 3.000 U/min. Im Drehzahlbereich 31, der dem Leerlauf entspricht, wird der Zündzeitpunkt ZZP auf einen dritten Zündzeitpunkt ZZP₃ eingestellt, der ein vergleichsweise später Zündzeitpunkt ist. Der dritte Zündzeitpunkt ZZP₃ im Leerlauf kann vorteilhaft von etwa 8° Kurbelwellenwinkel vor dem oberen Totpunkt des Kolbens 18 bis etwa 14° Kurbelwellenwinkel vor dem oberen Totpunkt des Kolbens 18 betragen. Der Kurbelwellenwinkel gibt dabei die relative Lage der Kurbelwelle 20 bezogen auf den oberen Totpunkt des Kolbens 18 an. 360° Kurbelwellenwinkel entsprechen einer vollen Umdrehung der Kurbelwelle 20.

Oberhalb der Einkuppeldrehzahl n_{K} erstreckt sich ein Drehzahlbereich 32, der dem Teillastbereich entspricht. Der Drehzahlbereich 32 erstreckt sich von der Einkuppeldrehzahl n_{K} bis zu einer Grenzdrehzahl n_{G}. Die Grenzdrehzahl n_{G} beträgt mindestens 7.000 U/min. Die Grenzdrehzahl n_{G} beträgt mindestens das Doppelte der Einkuppeldrehzahl n_{K}. Vorteilhaft beträgt die Grenzdrehzahl n_{G} zwischen etwa 7.000 U/min und etwa 9.000 U/min. Im Drehzahlbereich 32, der dem Teillastbereich entspricht, wird der Zündzeitpunkt ZZP von der Zündsteuereinrichtung 22 auf einen ersten Zündzeitpunkt ZZP₁ verstellt, der früher als der dritte Zündzeitpunkt ZZP₃ ist. Der erste Zündzeitpunkt ZZP₁ liegt im Bereich von etwa 10° Kurbelwellenwinkel vor dem oberen Totpunkt des Kolbens 18 bis etwa 40° Kurbelwellenwinkel vor dem oberen Totpunkt des Kolbens 18. Insbesondere liegt der erste Zündzeitpunkt ZZP₁ im Bereich von etwa 10° Kurbelwellenwinkel vor dem oberen Totpunkt des Kolbens 18 bis etwa 35° Kurbelwellenwinkel vor dem oberen Totpunkt des Kolbens 18. Über den gesamten ersten Drehzahlbereich 32 kann der zugeordnete erste Zündzeitpunkt ZZP₁ konstant sein. Mit durchgezogener Linie ist ein konstanter Verlauf des Zündzeitpunkts ZZP angegeben. Für jede Drehzahl n des ersten Drehzahlbereichs 32 wird demnach der gleiche Zündzeitpunkt ZZP₁ eingestellt. Es kann jedoch auch vorgesehen sein, dass sich der Zündzeitpunkt ZZP in Abhängigkeit der Drehzahl n ändert, wobei die Änderung des Zündzeitpunkts ZZP in einem Drehzahlbereich 31, 32, 33 vorteilhaft gering ist. Mit gestrichelter Linie 47 ist beispielhaft ein linear abfallender Verlauf der Kurve gezeigt, die die Beziehung zwischen Zündzeitpunkt ZZP und Drehzahl n angibt. Alle Zündzeitpunkte ZZP des ersten Drehzahlbereichs 32 liegen dabei in einem Drehzahlbereich 49, der vorteilhaft einen Bereich von höchstens etwa 8° Kurbelwellenwinkel umfasst. Auch eine Kombination von mit steigender Drehzahl n konstantem und mit steigender Drehzahl n abfallendem Verlauf der Kurve kann vorteilhaft sein. Ein abfallender Verlauf der Kurve entspricht dabei einer Verstellung des Zündzeitpunkts ZZP mit steigender Drehzahl n nach "spät". Vorteilhaft wird der Zündzeitpunkt ZZP im ersten Drehzahlbereich 32 mit steigender Drehzahl n nicht nach "früh" verstellt. Die Kurve, die den Verlauf des Zündzeitpunkts ZZP über der Drehzahl n im ersten Drehzahlbereich 32 angibt, ist vorteilhaft stetig, besitzt also keinen Zündzeitpunktsprung.

Oberhalb der Grenzdrehzahl n_{G} schließt an den Drehzahlbereich 32 ein Drehzahlbereich 33 an, der dem Volllastbereich entspricht. Im Drehzahlbereich 33 wird der Zündzeitpunkt ZZP auf einen zweiten Zündzeitpunkt ZZP₂ verstellt, der deutlich vor dem ersten Zündzeitpunkt ZZP₁ liegt. Mit durchgezogener Linie ist ein konstanter Verlauf des zweiten Zündzeitpunkts ZZP₂ über der Drehzahl n gezeigt. Der zweite Zündzeitpunkt ZZP₂ kann sich in Abhängigkeit der Drehzahl n jedoch auch ändern, wobei die Änderung insbesondere gering ist. Mit gestrichelter Linie 48 ist beispielhaft ein mit der Drehzahl abfallender Verlauf des zweiten Zündzeitpunkts ZZP₂ gezeigt, wobei der Abfall linear ist. Dabei wird mit steigender Drehzahl n ein späterer zweiter Zündzeitpunkt ZZP₂ eingestellt. Dadurch wird die Drehzahl n im zweiten Drehzahlbereich 33 stabilisiert. Die zweiten Zündzeitpunkte ZZP₂ liegen dabei in einem zweiten Drehzahlbereich 33, der vorteilhaft höchstens etwa 8° Kurbelwellenwinkel umfasst. Jeder zweite Zündzeitpunkt ZZP₂ liegt mindestens 5° Kurbelwellenwinkel, insbesondere mindestens 10° Kurbelwellenwinkel vor jedem ersten Zündzeitpunkt ZZP₁. Insbesondere liegt der zweite Zündzeitpunkt ZZP₂ an der Grenzdrehzahl n_{G} mindestens 10° Kurbelwellenwinkel vor dem ersten Zündzeitpunkt ZZP₁ an der Grenzdrehzahl n_{G}. Der Grenzwert der Kurven, die den Verlauf des Zündzeitpunkts ZZP über der Drehzahl n im ersten Drehzahlbereich 32 und im zweiten Drehzahlbereich 33 angeben, unterscheidet sich an der Grenzdrehzahl n_{G} demnach um mindestens 5° Kurbelwellenwinkel. Der Grenzwert liegt dabei für den ersten Drehzahlbereich 32 um mindestens 5° Kurbelwellenwinkel später als der Grenzwert für den zweiten Drehzahlbereich 33. Die Kurve, die den Verlauf des Zündzeitpunkts ZZP über der Drehzahl n angibt, weist an der Grenzdrehzahl n_{G} einen Sprung von mindestens 5° Kurbelwellenwinkel auf.

Jeder zweite Zündzeitpunkt ZZP₂ liegt vorteilhaft im Bereich von etwa 20° Kurbelwellenwinkel vor dem oberen Totpunkt des Kolbens 18 bis etwa 45° Kurbelwellenwinkel vor dem oberen Totpunkt des Kolbens 18. Der zweite Zündzeitpunkt ZZP₂ liegt insbesondere im Bereich von etwa 30° Kurbelwellenwinkel vor dem oberen Totpunkt des Kolbens 18 bis etwa 40° Kurbelwellenwinkel vor dem oberen Totpunkt des Kolbens 18.

Der Drehzahlbereich 33 erstreckt sich von der Grenzdrehzahl n_{G} bis zu einer zweiten Drehzahl n₂. Die zweite Drehzahl n₂ ist größer als die Grenzdrehzahl n_{G} und liegt vorteilhaft im Bereich von etwa 8.500 U/min bis zur maximalen Drehzahl des Verbrennungsmotors. An den Drehzahlbereich 33 schließt sich oberhalb der zweiten Drehzahl n₂ ein Drehzahlbereich 34 an, der dem Abregelbereich des Verbrennungsmotors 15 entspricht. Im Drehzahlbereich 34 wird der Zündzeitpunkt ZZP auf einen vierten Zündzeitpunkt ZZP₄ verstellt, der deutlich später als der zweite Zündzeitpunkt ZZP₂ ist. Im Ausführungsbeispiel ist der vierte Zündzeitpunkt ZZP₄ auch später als der erste Zündzeitpunkt ZZP₁. Der vierte Zündzeitpunkt ZZP₄ kann jedoch auch im Bereich des ersten Zündzeitpunkts ZZP₁ liegen. Durch die Verstellung des Zündzeitpunkts ZZP nach "spät" im Drehzahlbereich 34 wird der Verbrennungsmotor 15 abgeregelt und die Drehzahl n gesenkt. Für den Drehzahlbereich 34 kann auch ein anderer Zündzeitpunkt, beispielsweise der zweite Zündzeitpunkt ZZP₂, vorgesehen sein.

Der Drehzahlbereich 32, der dem Teillastbereich entspricht, ist als sehr breiter Bereich ausgeführt. Im Drehzahlbereich zwischen der Einkuppeldrehzahl n_{K} und der Grenzdrehzahl n_{G} ist der Zündzeitpunkt konstant, wenn der Motor mit einer Drehzahl betrieben wird, die innerhalb des Drehzahlbereichs 32 liegt. Dadurch ist ein stabiler Lauf des Verbrennungsmotors 15 in Teillast möglich. Dadurch, dass der Zündzeitpunkt ZZP₁ bis zur Grenzdrehzahl n_{G} konstant auf einen vergleichsweise späten Zündzeitpunkt ZZP₁ verstellt wird, ist auch in sehr hoher Teillast noch ein gleichmäßiger Betrieb des Verbrennungsmotors 15 mit geringen Drehzahlschwankungen möglich.

Es hat sich gezeigt, dass beim Übergang vom Drehzahlbereich 32 zum Drehzahlbereich 33 aufgrund des sprunghaften Verstellens des Zündzeitpunkts ZZP vom ersten Zündzeitpunkt ZZP₁ zum zweiten Zündzeitpunkt ZZP₂ bei der Grenzdrehzahl n_{G} Vibrationen entstehen können. Insbesondere bei Arbeitsgeräten mit einem Führungsrohr 3, wie dem in Fig. 1 gezeigten Freischneider, können diese Vibrationen zum Schwingen des gesamten Führungsrohrs 3 führen. Dies ist unerwünscht. Um die Vibrationen zu verringern oder zu vermeiden, ist vorgesehen, den Zündzeitpunkt ZZP wie in Fig. 5 durch die gestrichelte Linien 39 angedeutet nach Überschreiten der Grenzdrehzahl n_{G} beim Beschleunigen, also wenn sich die Drehzahl n vom Drehzahlbereich 32 für die Teillast zum Drehzahlbereich 33 für die Volllast ändert, den Zündzeitpunkt ZZP nicht sprunghaft vom ersten Zündzeitpunkt ZZP₁ auf den zweiten Zündzeitpunkt ZZP₂ zu verstellen, sondern entlang des Pfeils 40 eine zeitabhängige, insbesondere schrittweise Verstellung des Zündzeitpunkts ZZP vom ersten Zündzeitpunkt ZZP₁ auf den zweiten Zündzeitpunkt ZZP₂ vorzunehmen. Die zeitabhängige Verstellung des Zündzeitpunkts ZZP erfolgt dabei vorteilhaft, bis der zweite Zündzeitpunkt ZZP₂ erreicht ist oder die Drehzahl den Drehzahlbereich 33 für die Volllast verlässt.

Die schrittweise Verstellung des Zündzeitpunkts ZZP kann unmittelbar nach Überschreiten der Grenzdrehzahl n_{G} beginnen. Vorteilhaft erfolgt die Verstellung des Zündzeitpunkts vom ersten Zündzeitpunkt ZZP₁ auf den zweiten Zündzeitpunkt ZZP₂ jedoch verzögert. Hierzu kann vorgesehen sein, dass die Zündzeitpunktverstellung erst dann einsetzt, wenn eine oberhalb der Grenzdrehzahl n_{G} liegende Aktivierungsdrehzahl n_{A} überschritten wurde. Dies ist in Fig. 5 schematisch gezeigt. Alternativ oder zusätzlich kann mit der Verstellung des Zündzeitpunkts ZZP vom ersten Zündzeitpunkt ZZP₁ auf den zweiten Zündzeitpunkt ZZP₂ begonnen werden, wenn eine vorbestimmte Zeit, insbesondere eine vorbestimmte Anzahl von Motorzyklen nach Überschreiten der Grenzdrehzahl n_{G} verstrichen ist. Die zeitabhängige Verstellung des Zündzeitpunkts ZZP vermeidet ein wiederholtes, unmittelbar aufeinanderfolgendes Über- und Unterschreiten der Grenzdrehzahl n_{G} und die damit einhergehende Entstehung von Vibrationen. Dadurch, dass beim Überschreiten der Grenzdrehzahl n_{G} eine zeitabhängige Verstellung des Zündzeitpunkts ZZP erfolgt, ist zur Vermeidung eines Zündzeitpunktsprungs zwischen Teillastbereich und Volllastbereich kein linear ansteigender Bereich der Zündzeitpunktkurve zwischen Teillastbereich und Volllastbereich notwendig. Dadurch wird ein großer Drehzahlbereich 33 für die Volllast mit frühem Zündzeitpunkt ZZP und ein großer Drehzahlbereich 32 für die Teillast mit spätem Zündzeitpunkt ZZP ermöglicht.

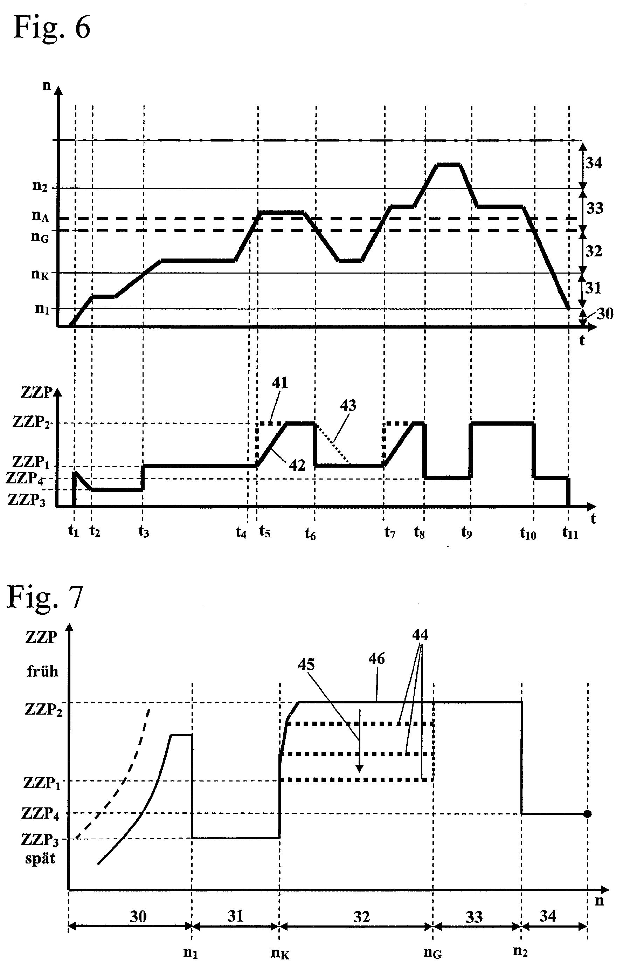

Fig. 6 zeigt schematisch den Verlauf der Drehzahl n und des Zündzeitpunkts ZZP über der Zeit t. Die Drehzahlbereiche 30, 31, 32, 33 und 34 sind in Fig. 6 der besseren Übersicht halber auf der rechten Seite des Diagramms eingezeichnet. Zu einem ersten Zeitpunkt t₁ wird der Verbrennungsmotor 15 gestartet. Die Drehzahl steigt bis zu einem zweiten Zeitpunkt t₂ an. Die Drehzahl befindet sich im Drehzahlbereich 30 für den Start. Bei steigender Drehzahl n wird der Zündzeitpunkt ZZP vorteilhaft anhand mehrerer Betriebsparameter gesteuert. Zum Zeitpunkt t₂ befindet sich die Drehzahl n zwischen der ersten Drehzahl n₁ und der Einkuppeldrehzahl n_{K} im Drehzahlbereich 31. Der Zündzeitpunkt ZZP ist im Drehzahlbereich 31 konstant und wird auf den dritten Zündzeitpunkt ZZP₃ eingestellt. Zum Zeitpunkt t₃ überschreitet die Drehzahl n die Einkuppeldrehzahl n_{K}. Der Zündzeitpunkt wird zum Zeitpunkt t₃ auf den ersten Zündzeitpunkt ZZP₁ für den Drehzahlbereich 32 verstellt. Zum Zeitpunkt t₄ wird die Grenzdrehzahl n_{G} überschritten. Der Zündzeitpunkt ZZP bleibt zunächst der erste Zündzeitpunkt ZZP₁, bis nach weiterer Beschleunigung bis zum Zeitpunkt t₅ auch die Aktivierungsdrehzahl n_{A} überschritten wird. Erst zum Zeitpunkt t₅ wird der Zündzeitpunkt ZZP vom ersten Zündzeitpunkt ZZP₁ auf den zweiten Zündzeitpunkt ZZP₂ verstellt. Alternativ kann der Zündzeitpunkt nach Ablauf einer vorbestimmten Zeit, die beispielsweise der Zeitspanne zwischen den Zeitpunkten t₄ und t₅ entsprechen kann, verstellt werden. Diese Verstellung erfolgt jedoch nicht, wie durch die gestrichelte Linie 41 angedeutet ist, sprunghaft, sondern schrittweise, im Ausführungsbeispiel in Form einer linear verlaufenden Rampe, bis der zweite Zündzeitpunkt ZZP₂ erreicht ist. Anstatt der Rampe, die durch eine Linie 42 dargestellt wird, kann jeder beliebige andere Verlauf des Zündzeitpunkts ZZP bei der Verstellung des Zündzeitpunkts ZZP vom ersten Zündzeitpunkt ZZP₁ auf den zweiten Zündzeitpunkt ZZP₂ vorgesehen sein.

Zum Zeitpunkt t₆ fällt die Drehzahl n unter die Grenzdrehzahl n_{G} und der Zündzeitpunkt wird sprunghaft vom zweiten Zündzeitpunkt ZZP₂ auf den ersten Zündzeitpunkt ZZP₁ verstellt, wie in Fig. 6 mit durchgezogener Linie gezeigt ist. Zum Zeitpunkt t₇ wird die Aktivierungsdrehzahl n_{A} erneut überschritten, und der Zündzeitpunkt ZZP wird schrittweise vom ersten Zündzeitpunkt ZZP₁ auf den zweiten Zündzeitpunkt ZZP₂ verstellt. Zum Zeitpunkt t₈ wird die zweite Drehzahl n₂ überschritten, und die Drehzahl wird abgeregelt. Hierzu wird der Zündzeitpunkt ZZP auf einen vierten Zündzeitpunkt ZZP₄ verstellt, der vergleichsweise "spät" liegt. Im Ausführungsbeispiel liegt der vierte Zündzeitpunkt ZZP₄ zwischen dem ersten Zündzeitpunkt ZZP₁ und dem dritten Zündzeitpunkt ZZP₃. Die Abregelung kann auch auf andere Weise erfolgen. Zum Zeitpunkt t₉ wird die Drehzahl n₂ wieder unterschritten, und der Zündzeitpunkt ZZP wird sprunghaft auf den zweiten Zündzeitpunkt ZZP₂ für den Volllastbereich verstellt. Zum Zeitpunkt t₁₀ wird auch die Grenzdrehzahl n_{G} unterschritten, und der Zündzeitpunkt ZZP wird sprunghaft vom zweiten Zündzeitpunkt ZZP₂ auf den ersten Zündzeitpunkt ZZP₁ verstellt. Zum Zeitpunkt t₁₁ wird der Verbrennungsmotor 15 ausgeschaltet, insbesondere durch Kurzschließen der Zündung, so dass keine weiteren Zündungen mehr erfolgen.

Es hat sich gezeigt, dass insbesondere bei kaltem Verbrennungsmotor, also wenn die Betriebstemperatur des Verbrennungsmotors 15 unterhalb einer vorgegebenen Betriebstemperatur liegt, der späte erste Zündzeitpunkt ZZP₁ zu schlechter Beschleunigung im ersten Drehzahlbereich 32 führt. Um dies zu vermeiden, ist bei Erfüllen mindestens eines ersten Kriteriums, insbesondere bei einem Betrieb unterhalb einer vorgegebenen Betriebstemperatur des Verbrennungsmotors 15, vorgesehen, den Zündzeitpunkt ZZP im Drehzahlbereich 32 schrittweise vom zweiten Zündzeitpunkt ZZP₂ auf den ersten Zündzeitpunkt ZZP₁ zu verstellen, wie durch die Linie 44 und den Pfeil 45 in Fig. 7 angedeutet. Dabei ist vorgesehen, dass bei einer Drehzahländerung in den Drehzahlbereich 32, also wenn die Drehzahl aus dem Drehzahlbereich 31 über die Einkuppeldrehzahl n_{K} ansteigt oder aus dem Drehzahlbereich 33 unter die Grenzdrehzahl n_{G} fällt, der Zündzeitpunkt ZZP zunächst auf den zweiten Zündzeitpunkt ZZP₂ verstellt wird und der Zündzeitpunkt ZZP dann schrittweise nach "spät" auf den ersten Zündzeitpunkt ZZP₁ verstellt wird, sobald das erste Kriterium erfüllt ist. Der in Fig. 7 mit durchgezogener Linie 46 gezeigte Verlauf des Zündzeitpunkts ZZP im Drehzahlbereich 32 entspricht einer bekannten Kennlinie für den Zündzeitpunkt ZZP, mit der ein stabiler Betrieb des Verbrennungsmotors 15 im Drehzahlbereich 32 bei näherungsweise konstanter Drehzahl nicht möglich ist, da sich sehr große Drehzahlschwankungen ergeben. Die Drehzahlschwankungen resultieren aus der großen Beschleunigung aufgrund der energiereichen Verbrennung bei frühem Zündzeitpunkt und der oder den daran anschließenden Motorzyklen ohne Verbrennung, in denen die Zündung zur Regelung der Drehzahl ausgesetzt wird.

Liegt die Betriebstemperatur unter einer vorgegebenen Temperatur, so hat sich gezeigt, dass sich beim ersten Zündzeitpunkt ZZP₁ im Drehzahlbereich 32 eine zu geringe Brenndauer und dadurch eine zu geringe Beschleunigung ergeben. Ist die Betriebstemperatur oberhalb der vorgegebenen Betriebstemperatur, der Verbrennungsmotor 15 also warm, so wird bei einem Betrieb des Verbrennungsmotors 15 anhand der Linie 46 im Drehzahlbereich 32 eine zu große Leistung im Drehzahlbereich 32, also in der Teillast erzielt, wodurch sich sehr große Drehzahlschwankungen ergeben. Die Verstellung des Zündzeitpunkts vom zweiten Zündzeitpunkt ZZP₂ auf den ersten Zündzeitpunkt ZZP₁ in mehreren Schritten ist deshalb vorteilhaft nur bei Vorliegen eines vorgegebenen ersten Kriteriums vorgesehen. Das erste Kriterium ist vorteilhaft das Erreichen einer vorgegebenen Betriebstemperatur des Verbrennungsmotors 15.

Um abzuschätzen, ob der Verbrennungsmotor 15 eine vorgegebene Betriebstemperatur erreicht hat, kann eine Temperatur und/oder der Ablauf einer vorgegebenen Zeitdauer herangezogen werden. Zur Ermittlung des Ablaufs einer vorgegebenen Zeitdauer wird vorteilhaft die Anzahl durchlaufender Motorzyklen ab einem vorgegebenen Ereignis ermittelt. Vorteilhaft wird vor dem Starten des Verbrennungsmotors 15 die Temperatur des Verbrennungsmotors 15 oder eine andere Temperatur des Arbeitsgeräts 1 gemessen. Die Temperatur ist insbesondere die Temperatur eines Steuergeräts wie der Zündsteuereinrichtung 22 des Arbeitsgeräts 1. Anhand der Temperatur beim Starten kann festgelegt werden, wie viele Motorzyklen bis zum Erreichen der vorgegebenen Betriebstemperatur notwendig sind. Dabei können die Motorzyklen ab dem Start oder die Motorzyklen oberhalb einer vorgegebenen Drehzahl oder ab Überschreiten einer vorgegebenen Drehzahl, beispielsweise der Grenzdrehzahl n_{G} herangezogen werden. Eine genaue Messung der Betriebstemperatur des Verbrennungsmotos 15 kann vorteilhaft sein. Für die Einstellung des Zündzeitpunkts wird jedoch eine Abschätzung der Betriebstemperatur üblicherweise ausreichend genau sein. eine Abschätzung der Betriebstemperatur lässt sich auf einfache Weise, beispielsweise anhand einer Starttemperatur und/oder einer Anzahl von Motorzyklen, vornehmen.

Die Verstellung des Zündzeitpunkts ZZP vom zweiten Zündzeitpunkt ZZP₂ auf den ersten Zündzeitpunkt ZZP₁ im Drehzahlbereich 32 kann zeitverzögert erfolgen, also nachdem sich die Drehzahl bereits für eine vorgegebene Anzahl von Motorzyklen innerhalb des Drehzahlbereichs 32 bewegt. Der Verlauf des Zündzeitpunkts ZZP bei einer schrittweisen Verstellung des Zündzeitpunkts zum zweiten Zündzeitpunkt ZZP₂ auf den ersten Zündzeitpunkt ZZP₁ ist in Fig. 6 schematisch ausgehend vom Zeitpunkt t₆ durch eine Linie 43 verdeutlicht. Die Verstellung des Zündzeitpunkts ZZP vom zweiten Zündzeitpunkt ZZP₂ auf den ersten Zündzeitpunkt ZZP₁ im Drehzahlbereich 32 erfolgt vorteilhaft ein Mal, nämlich wenn das erste vorgegebene Kriterium erfüllt wird. Befindet sich die Drehzahl n zu diesem Zeitpunkt nicht innerhalb des ersten Drehzahlbereichs 32, kann vorgesehen sein, den Zündzeitpunkt ZZP im ersten Drehzahlbereich 32 vor Erfüllen des ersten vorgegebenen Kriteriums auf den ersten Zündzeitpunkt ZZP₁ einzustellen. Tritt die Drehzahl n nach dem Erfüllen des ersten vorgegebenen Kriteriums wieder in den ersten Drehzahlbereich 32 ein, so kann vorgesehen sein, dass der Zündzeitpunkt ZZP unmittelbar auf den ersten Zündzeitpunkt ZZP₁ verstellt wird.

## Patentansprüche

1. Verfahren zum Betrieb eines Verbrennungsmotors in einem handgeführten Arbeitsgerät, wobei das Arbeitsgerät (1) eine Kupplung (25) und mindestens ein Werkzeug besitzt, wobei die Kupplung (25) bei einer Einkuppeldrehzahl (n_{K}) einkuppelt, und wobei der Verbrennungsmotor (15) bei Drehzahlen (n) oberhalb der Einkuppeldrehzahl (n_{K}) in Wirkverbindung mit dem Werkzeug steht, wobei der Verbrennungsmotor (15) einen Zylinder (16) besitzt, in dem ein Kolben (18) hin- und hergehend gelagert ist, wobei der Kolben (18) eine in einem Kurbelgehäuse (17) drehbar gelagerte Kurbelwelle (20) rotierend antreibt, wobei der Verbrennungsmotor (15) eine Zündsteuereinrichtung (22) besitzt, die für jede Drehzahl (n) des Verbrennungsmotors (15) mindestens einen Zündzeitpunkt (ZZP) vorgibt, wobei die Zündsteuereinrichtung (22) für jede Drehzahl (n) eines ersten Drehzahlbereichs (32) einen zugeordneten ersten Zündzeitpunkt (ZZP₁) und für jede Drehzahl (n) eines zweiten, oberhalb an den ersten Drehzahlbereich (32) angrenzenden Drehzahlbereichs (33) einen zugeordneten zweiten Zündzeitpunkt (ZZP₂) vorgibt, wobei jeder erste Zündzeitpunkt (ZZP₁) ein Zündzeitpunkt (ZZP) eines ersten Zündzeitpunktbereichs (49) ist und jeder zweite Zündzeitpunkt (ZZP₂) ein Zündzeitpunkt (ZZP) eines zweiten Zündzeitpunktbereichs (50), und wobei jeder erste Zündzeitpunkt (ZZP₁) um mindestens 5° Kurbelwellenwinkel später liegt als jeder zweite Zündzeitpunkt (ZZP₂),
**dadurch gekennzeichnet, dass** der erste Drehzahlbereich (32) sich mindestens von der Einkuppeldrehzahl (n_{K}) bis zu einer Grenzdrehzahl (n_{G}) erstreckt, die mindestens etwa 7000 U/min beträgt.

2. Verfahren nach Anspruch 1,
**dadurch gekennzeichnet, dass** die Grenzdrehzahl (n_{G}) mindestens dem Doppelten der Einkuppeldrehzahl (n_{K}) entspricht.

3. Verfahren nach Anspruch 1 oder 2,
**dadurch gekennzeichnet, dass** die Grenzdrehzahl (n_{G}) etwa 7000 U/min bis etwa 9000 U/min beträgt.

4. Verfahren nach einem der Ansprüche 1 bis 3,
**dadurch gekennzeichnet, dass** der erste Zündzeitpunkt (ZZP₁) und der zweite Zündzeitpunkt (ZZP₂) sich um mindestens 10° Kurbelwellenwinkel unterscheiden.

5. Verfahren nach einem der Ansprüche 1 bis 4,
**dadurch gekennzeichnet, dass** jeder Zündzeitpunktbereich (49, 50) höchstens 8° Kurbelwellenwinkel umfasst.

6. Verfahren nach einem der Ansprüche 1 bis 5,
**dadurch gekennzeichnet, dass** der Zündzeitpunkt (ZZP) in dem ersten Drehzahlbereich (32) bei steigender Drehzahl (n) nicht nach "früh" verstellt wird.

7. Verfahren nach einem der Ansprüche 1 bis 6,
**dadurch gekennzeichnet, dass** die Kurve, die die Beziehung zwischen Zündzeitpunkt (ZZP) und Drehzahl (n) in dem ersten Drehzahlbereich (32) angibt, stetig ist.

8. Verfahren nach einem der Ansprüche 1 bis 7,
**dadurch gekennzeichnet, dass** der erste Zündzeitpunkt (ZZP₁) im Bereich von etwa 10° Kurbelwellenwinkel vor dem oberen Totpunkt des Kolbens (18) bis etwa 40° Kurbelwellenwinkel vor dem oberen Totpunkt des Kolbens (18) liegt.

9. Verfahren nach einem der Ansprüche 1 bis 8,
**dadurch gekennzeichnet, dass** der zweite Zündzeitpunkt (ZZP₂) im Bereich von etwa 20° Kurbelwellenwinkel vor dem oberen Totpunkt des Kolbens (18) bis etwa 45° Kurbelwellenwinkel vor dem oberen Totpunkt des Kolbens (18) liegt.

10. Verfahren nach einem der Ansprüche 1 bis 9,
**dadurch gekennzeichnet, dass** in mindestens einem Betriebszustand bei einer Drehzahländerung von einer Drehzahl (n) außerhalb eines der Drehzahlbereiche (32, 33) zu einer Drehzahl (n) dieses Drehzahlbereichs (32, 33) der Zündzeitpunkt (ZZP) nicht sprunghaft auf den diesem Drehzahlbereich (32, 33) zugeordneten Zündzeitpunkt (ZZP₁, ZZP₂) verstellt wird, sondern zeitabhängig gesteuert wird, bis der zugeordnete Zündzeitpunkt (ZZP₁, ZZP₂) erreicht ist oder die Drehzahl (n) diesen Drehzahlbereich (32, 33) wieder verlässt.

11. Verfahren nach Anspruch 10,
**dadurch gekennzeichnet, dass** die zeitabhängige Steuerung des Zündzeitpunkts (ZZP) in Abhängigkeit einer Anzahl von Motorzyklen erfolgt.

12. Verfahren nach Anspruch 10 oder 11,
**dadurch gekennzeichnet, dass** der Zündzeitpunkt (ZZP) nach Überschreiten der Grenzdrehzahl (n_{G}) und nach darauffolgendem Durchlaufen einer vorgegebenen Anzahl von Motorzyklen in diesem Drehzahlbereich (32, 33) schrittweise auf den diesem Drehzahlbereich (32, 33) zugeordneten Zündzeitpunkt (ZZP₁, ZZP₂) verstellt wird.

13. Verfahren nach einem der Ansprüche 10 bis 12,
**dadurch gekennzeichnet, dass** der Zündzeitpunkt (ZZP) bei einer Drehzahländerung von einer Drehzahl (n) des ersten Drehzahlbereichs (32) zu einer Drehzahl (n) des zweiten Drehzahlbereichs (33) in mindestens einem Betriebszustand ausgehend vom ersten Zündzeitpunkt (ZZP₁) zeitabhängig nach "früh" verstellt wird, bis der zweite Zündzeitpunkt (ZZP₂) erreicht ist oder die Drehzahl (n) den zweiten Drehzahlbereich (33) verlässt.

14. Verfahren nach Anspruch 13,
**dadurch gekennzeichnet, dass** die zeitabhängige Verstellung des Zündzeitpunkts (ZZP) bei einer Drehzahländerung von einer Drehzahl (n) des ersten Drehzahlbereichs (32) zu einer Drehzahl (n) des zweiten Drehzahlbereichs (33) in jedem Betriebszustand erfolgt.

15. Verfahren nach einem der Ansprüche 10 bis 14,
**dadurch gekennzeichnet, dass** der Zündzeitpunkt (ZZP) bei einer Drehzahländerung von einer Drehzahl (n) außerhalb des ersten Drehzahlbereichs (32) zu einer Drehzahl (n) des ersten Drehzahlbereichs (32) bei Erfüllen mindestens eines ersten vorgegebenen Kriteriums ausgehend vom zweiten Zündzeitpunkt (ZZP₂) zeitabhängig nach "spät" verstellt wird, bis der erste Zündzeitpunkt (ZZP₁) erreicht ist oder die Drehzahl (n) den ersten Drehzahlbereich (32) verlässt.

16. Verfahren nach Anspruch 15,
**dadurch gekennzeichnet, dass** das erste vorgegebene Kriterium das Erreichen einer Temperatur des Arbeitsgeräts (1) und/oder das Durchlaufen einer vorgegebenen Anzahl von durchlaufenen Motorzyklen nach einem vorgegebenen Ereignis ist, wobei das vorgegebene Ereignis insbesondere der Start des Verbrennungsmotors (15) oder das erstmalige Erreichen einer vorgegebenen Drehzahl (n) ist.

17. Verfahren nach einem der Ansprüche 14 bis 16,
**dadurch gekennzeichnet, dass** bei Erfüllen mindestens eines zweiten vorgegebenen Kriteriums der Zündzeitpunkt (ZZP) bei einer Drehzahländerung von einer Drehzahl (n) außerhalb des ersten Drehzahlbereichs (32) zu einer Drehzahl (n) des ersten Drehzahlbereichs (32) sprunghaft auf den ersten Zündzeitpunkt (ZZP₁) verstellt wird.

18. Verfahren nach einem der Ansprüche 1 bis 17,
**dadurch gekennzeichnet, dass** der zweite Drehzahlbereich (33) dem Volllastbereich entspricht.

## Claims

1. Method for operating an internal combustion engine in a hand-guided working implement, wherein the working implement (1) comprises a clutch (25) and at least one tool, wherein the clutch (25) engages at an engagement speed (n_{K}) and wherein the internal combustion engine (15) is in operative connection with the tool at speeds (n) above the engagement speed (n_{K}), wherein the internal combustion engine (15) has a cylinder (16), in which a piston (18) is mounted for reciprocating movement, wherein the piston (18) drives a crankshaft (20) rotatably mounted in a crankcase (17) to rotate, wherein the internal combustion engine (15) has an ignition control device (22), which predetermines at least one ignition point (ZZP) for each speed (n) of the internal combustion engine (15), wherein the ignition control device (22) predetermines for each speed (n) of a first speed range (32) an associated first ignition point (ZZP₁) and for each speed (n) of a second speed range (33) adjoining and above the first speed range (32) an associated second ignition point (ZZP₂), wherein each first ignition point (ZZP₁) is an ignition point (ZZP) of a first ignition point range (49) and each second ignition point (ZZP₂) is an ignition point (ZZP) of a second ignition point range (50), and wherein each first ignition point (ZZP₁) is retarded by at least 5° crank angle relative to each second ignition point (ZZP₂),
**characterised in that** the first speed range (32) extends at least from the engagement speed (n_{K}) to a limit speed (n_{G}) which is at least approximately 7000 rpm.

2. Method according to claim 1,
**characterised in that** the limit speed (n_{G}) corresponds to at least twice the engagement speed (n_{K}).

3. Method according to claim 1 or 2,
**characterised in that** the limit speed (n_{G}) is approximately 7000 to 9000 rpm.

4. Method according to any of claims 1 to 3,
**characterised in that** the first ignition point (ZZP₁) and the second ignition point (ZZP₂) differ by at least 10° crank angle.

5. Method according to any of claims 1 to 4,
**characterised in that** each ignition point range (49, 50) comprises a maximum of 8° crank angle.

6. Method according to any of claims 1 to 5,
**characterised in that** the ignition point (ZZP) is not advanced in the first speed range (32) if the speed (n) increases.

7. Method according to any of claims 1 to 6,
**characterised in that** the curve which indicates the relationship between ignition point (ZZP) and speed (n) is constant in the first speed range (32).

8. Method according to any of claims 1 to 7,
**characterised in that** the first ignition point (ZZP₁) lies in a range of approximately 10° crank angle before the top dead centre of the piston (18) to approximately 40° crank angle before the top dead centre of the piston (18).

9. Method according to any of claims 1 to 8,
**characterised in that** the second ignition point (ZZP₂) lies in a range of approximately 20° crank angle before the top dead centre of the piston (18) to approximately 45° crank angle before the top dead centre of the piston (18).

10. Method according to any of claims 1 to 9,
**characterised in that** in at least one operating state, at a speed change from a speed (n) outside one of the speed ranges (32, 33) to a speed (n) within this speed range (32, 33), the ignition point (ZZP) is not adjusted discontinuously to the ignition point (ZZP₁, ZZP₂) assigned to the said speed range (32, 33), but controlled in a time-dependent way until the associated ignition point (ZZP₁, ZZP₂) is reached or the speed (n) once again departs from the said speed range (32, 33).

11. Method according to claim 10,
**characterised in that** the ignition point (ZZP) is controlled in a time-dependent way as a function of a number of engine cycles.

12. Method according to claim 10 or 11,
**characterised in that** the ignition point (ZZP), after the limit speed (n_{G}) has been exceeded and after the subsequent passage through a preset number of engine cycles in the said speed range (32, 33), is gradually adjusted to the ignition point (ZZP₁, ZZP₂) assigned to the said speed range (32, 33).

13. Method according to any of claims 10 to 12,
**characterised in that** the ignition point (ZZP), at a speed change from a speed (n) of the first speed range (32) to a speed (n) of the second speed range (33), is in at least one operating state advanced from the first ignition point (ZZP₁) in a time-dependent manner until the second ignition point (ZZP₂) is reached or the speed (n) departs from the second speed range (33).

14. Method according to claim 13,
**characterised in that** the time-dependent adjustment of the ignition point (ZZP) at a speed change from a speed (n) of the first speed range (32) to a speed (n) of the second speed range (33) is performed in every operating state.

15. Method according to any of claims 10 to 14,
**characterised in that** the ignition point (ZZP), at a speed change from a speed (n) outside the first speed range (32) to a speed (n) of the first speed range (32), is, if at least one first preset criterion is met, retarded in a time-dependent way from the second ignition point (ZZP₂) until the first ignition point (ZZP₁) is reached or the speed (n) departs from the first speed range (32).

16. Method according to claim 15,
**characterised in that** the first preset criterion is the reaching of a temperature of the working implement (1) or the passage through a preset number of engine cycles after a preset event, the preset event in particular being the start of the internal combustion engine (1) of the first reaching of a preset speed (n).

17. Method according to any of claims 14 to 16,
**characterised in that**, if at least one second preset criterion is met, the ignition point (ZZP), at a speed change from a speed (n) outside the first speed range (32) to a speed (n) of the first speed range (32), is discontinuously adjusted to the first ignition point (ZZP₁).

18. Method according to any of claims 1 to 17,
**characterised in that** the second speed range (33) corresponds to the full load range.

## Revendications

1. Procédé pour le fonctionnement d'un moteur à combustion interne dans un outillage portatif, l'outillage (1) comportant un accouplement (25) et au moins un outil, l'accouplement (25) embrayant en présence d'une vitesse d'embrayage (n_{K}) et le moteur à combustion interne (15), en présence de vitesses de rotation (n) situées au-dessus de la vitesse de rotation d'embrayage (n_{K}), étant en relation fonctionnelle avec l'outil, le moteur à combustion interne (15) comportant un cylindre (16) dans lequel un piston (18) est monté avec un mouvement de va-et-vient, le piston (18) entraînant un vilebrequin (20) monté en rotation dans un carter de vilebrequin (17), le moteur à combustion interne (15) comportant un dispositif de commande d'allumage (22) qui prédéfinit pour chaque vitesse de rotation (n) du moteur à combustion interne (15) au moins un moment d'allumage (ZZP), le dispositif de commande d'allumage (22) prédéfinissant pour chaque vitesse de rotation (n) d'une première plage de vitesse de rotation (32) un premier moment d'allumage (ZZP₁) associé, et pour chaque vitesse de rotation (n) d'une deuxième plage de vitesse de rotation (33), supérieure à et voisine de la première plage (32), un deuxième moment d'allumage (ZZP₂) associé, chaque premier moment d'allumage (ZZP₁) étant un moment d'allumage (ZZP) d'une première plage de moment d'allumage (49), et chaque deuxième moment d'allumage (ZZP₂) étant un moment d'allumage (ZZP) d'une deuxième plage de moment d'allumage (50), et chaque premier moment d'allumage (ZZP₁) étant postérieur d'au moins 5° d'angle de vilebrequin à chaque deuxième moment d'allumage (ZZP₂),
**caractérisé en ce que** la première plage de vitesse de rotation (32) s'étend au moins de la vitesse de rotation d'embrayage (n_{K}) jusqu'à une vitesse de rotation limite (n_{G}), qui est d'au moins environ 7000 t/min.

2. Procédé selon la revendication 1,
**caractérisé en ce que** la vitesse de rotation limite (n_{G}) correspond au moins à deux fois la vitesse de rotation d'embrayage (n_{K}).

3. Procédé selon la revendication 1 ou 2,
**caractérisé en ce que** la vitesse de rotation limite (n_{G}) est d'environ 7000 t/min à environ 9000 t/min.

4. Procédé selon l'une des revendications 1 à 3,
**caractérisé en ce que** le premier moment d'allumage (ZZP₁) et le deuxième moment d'allumage (ZZP₂) présentent une différence d'au moins 10° d'angle de vilebrequin.

5. Procédé selon l'une des revendications 1 à 4,
**caractérisé en ce que** chaque plage de moment d'allumage (49, 50) comprend au maximum 8° d'angle de vilebrequin.

6. Procédé selon l'une des revendications 1 à 5,
**caractérisé en ce que** le moment d'allumage (ZZP) dans la première plage de vitesse de rotation (32) en présence d'une vitesse de rotation (n) croissante n'est pas réglé dans le sens d'une "avance".

7. Procédé selon l'une des revendications 1 à 6,
**caractérisé en ce que** la courbe qui indique la relation entre le moment d'allumage (ZZP) et la vitesse de rotation (n) dans la plage de vitesse de rotation est continue.

8. Procédé selon l'une des revendications 1 à 7,
**caractérisé en ce que** le premier moment d'allumage (ZZP₁) est situé dans la plage d'environ 10° d'angle de vilebrequin avant le point mort haut du piston (18) jusqu'à environ 40° d'angle de vilebrequin avant le point mort haut du piston (18).

9. Procédé selon l'une des revendications 1 à 8,
**caractérisé en ce que** le deuxième moment d'allumage (ZZP₂) est situé dans la plage d'environ 20° d'angle de vilebrequin avant le point mort haut du piston (18) à environ 45° d'angle de vilebrequin avant le point mort haut du piston (18).

10. Procédé selon l'une des revendications 1 à 9,
**caractérisé en ce que** dans au moins un état de fonctionnement, lors d'un changement d'une vitesse de rotation (n) située en dehors de l'une de ces plages de vitesse de rotation (32, 33) à une vitesse de rotation (n) de cette plage de vitesse de rotation (32, 33), le moment d'allumage est non pas réglé brusquement au moment d'allumage (ZZP₁, ZZP₂) associé à cette plage (32, 33), mais il est commandé en fonction du temps jusqu'à ce que le moment d'allumage (ZZP₁, ZZP₂) associé soit atteint ou que la vitesse de rotation (n) quitte à nouveau cette plage (32, 33).

11. Procédé selon la revendication 10,
**caractérisé en ce que** la commande du moment d'allumage (ZZP) en fonction du temps se fait en fonction d'un nombre de cycles de moteur.

12. Procédé selon la revendication 10 ou 11,
**caractérisé en ce que** le moment d'allumage (ZZP), après le franchissement de la vitesse de rotation limite (n_{G}) et l'exécution qui suit d'un nombre prédéfini de cycles de moteur dans cette plage de vitesse de rotation (32, 33), est réglé progressivement au moment d'allumage (ZZP₁, ZZP₂) associé à cette plage (32, 33).

13. Procédé selon l'une des revendications 10 à 12,
**caractérisé en ce que** le moment d'allumage (ZZP), lors d'un changement d'une vitesse de rotation (n) de la première plage de vitesse de rotation (32) à une vitesse de rotation (n) de la deuxième plage de vitesse de rotation (33) dans au moins un état de fonctionnement, est réglé en fonction du temps, à partir du premier moment d'allumage (ZZP₁), dans le sens d'une "avance" jusqu'à ce que le deuxième moment d'allumage (ZZP₂) soit atteint ou que la vitesse de rotation (n) quitte la plage (32).

14. Procédé selon la revendication 13,
**caractérisé en ce que** le réglage du moment d'allumage (ZPP) en fonction du temps, lors d'un changement d'une vitesse de rotation (n) de la première plage de vitesse de rotation (32) à une vitesse de rotation (n) de la deuxième plage de vitesse de rotation (33) se fait dans chaque état de fonctionnement.

15. Procédé selon l'une des revendications 10 à 14,
**caractérisé en ce que** le moment d'allumage (ZZP), lors d'un changement d'une vitesse de rotation (n) située en dehors de la première plage de vitesse de rotation (32) à une vitesse de rotation (n) de la première plage de vitesse de rotation (32), est réglé en fonction du temps, si au moins un premier critère prédéfini est satisfait, à partir du deuxième moment d'allumage (ZZP₂), dans le sens d'un "retard" jusqu'à ce que le premier moment d'allumage (ZZP₁) soit atteint ou que la vitesse de rotation (n) quitte la première plage (32).

16. Procédé selon la revendication 15,
**caractérisé en ce que** le premier critère prédéfini est qu'une température de l'outillage (1) soit atteinte et/ou qu'un nombre prédéfini de cycles de moteur soit accompli, après un événement prédéfini, ledit événement prédéfini étant en particulier le démarrage du moteur à combustion interne (15) ou le fait qu'une vitesse de rotation (n) soit atteinte pour la première fois.

17. Procédé selon l'une des revendications 14 à 16,
**caractérisé en ce que** si au moins un deuxième critère prédéfini est satisfait, le moment d'allumage (ZZP), lors d'un changement d'une vitesse de rotation (n) située en dehors de la première plage de vitesse de rotation (32) à une vitesse de rotation (n) de la première plage de vitesse de rotation (32), est réglé brusquement au premier moment d'allumage (ZZP₁).

18. Procédé selon l'une des revendications 1 à 17,
**caractérisé en ce que** la deuxième plage de vitesse de rotation (33) correspond à la plage de pleine charge.
